# EUROPEAN PATENT SPECIFICATION

(11) **EP 0 756 183 B1**
(45) Date of publication and mention of the grant of the patent: **27.02.2002**
(21) Application number: 96112149.8
(22) Date of filing: 26.07.1996
(51) Int. Cl.: G02B 1/04

(54) **Lens for eyeglasses**
Brillenlinse
Lentilles pour lunettes

(30) Priority: 28.07.1995 JP 19298895
(43) Date of publication of application: 29.01.1997
(73) Proprietor: KYOWA HAKKO KOGYO CO., LTD., Chiyoda-ku, Tokyo-to (JP); YAMAMOTO KOGAKU CO., LTD., Higashiosaka-shi, Osaka-fu (JP)
(72) Inventor: Matsushita, Shoshiro, Yokkaichi-shi, Mie-ken (JP); Shimizu, Ikuo, Yokkaichi-shi, Mie-ken (JP); Mabuchi, Kazuko, Nishinomiya-shi, Hyogo-ken (JP); Ishiba, Yoshihisa, Daito-shi, Osaka-fu (JP); Murata, Oritoshi, Higashiosaka-shi, Osaka-fu (JP)
(74) Representative: VOSSIUS & PARTNER

(56) References cited:
- US-A- 5 182 588
- US-A- 5 270 854
- PATENT ABSTRACTS OF JAPAN vol. 095, no. 002, 31 March 1995 & JP 06 324293 A (DAISERU AMIBOSHI SANGYO KK), 25 November 1994,
- PATENT ABSTRACTS OF JAPAN vol. 018, no. 402 (P-1777), 27 July 1994 & JP 06 118227 A (KYOWA HAKKO KOGYO CO LTD;OTHERS: 01), 28 April 1994,
- PATENT ABSTRACTS OF JAPAN vol. 016, no. 406 (C-0978), 27 August 1992 & JP 04 134061 A (MITSUBISHI CABLE IND LTD;OTHERS: 01), 7 May 1992,

## Description

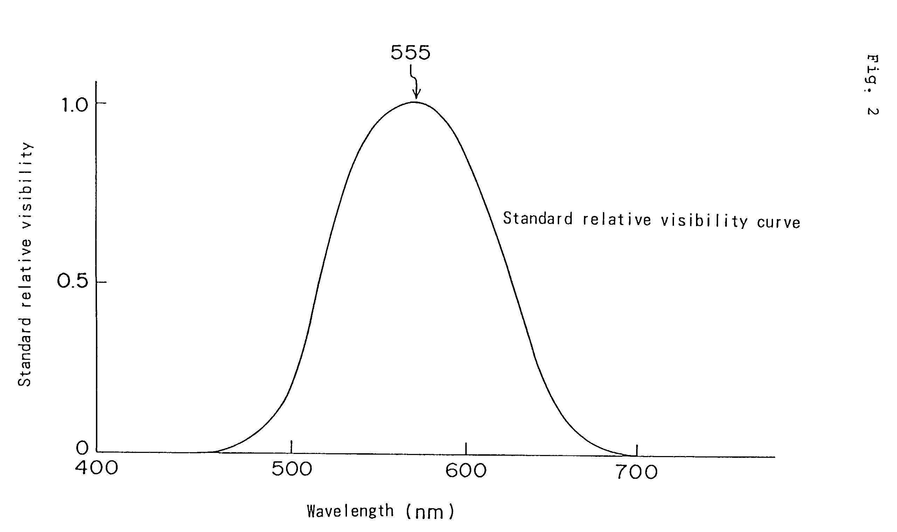

The sunlight contains some kinds of light harmful to eyes and gives a sense of glare to the eyes. In general, sunglasses are used for controlling the transmission of sunlight and, therefore, produced under a design for decreasing the transmittance of light in the vicinity of the central wavelength on the standard relative visibility curve as shown in Figure 2 and thereby reducing the glare of sunlight.

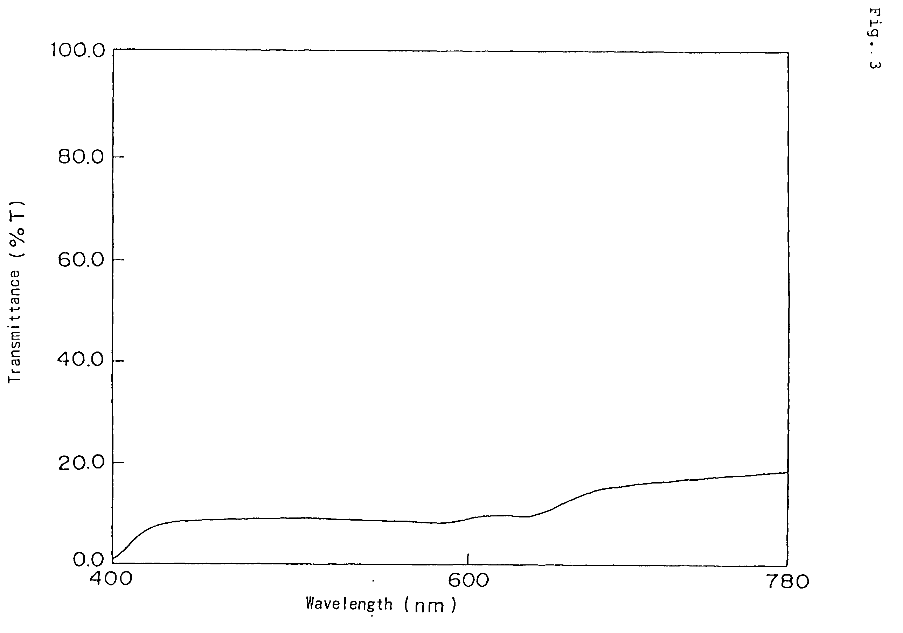

In the conventional sunglasses, however, the transmittance of light over the other range of wavelength is also decreased as shown in Figure 3. For this reason, when the sunglasses are used under the conditions that the amount of light is small such as in the twilight, the whole field of vision may become dark, and it may, therefore, be difficult to observe an object in the open air. In other words, the attempt at reducing the glare of sunlight may result in an excessive decrease in the amount of transmitted light all over the range of wavelength, thereby causing a problem that the object cannot be fully observed.

As the sunglasses which can exhibit non-glaring effects by decreasing the transmittance of light in the vicinity of the central wavelength on the standard relative visibility curve, while retaining the lightness in the whole field of vision, there are well known sunglasses which are made of a glass material containing neodymium or didymium for absorption of light in the vicinity of 590 nm. From the viewpoint of eye protection, it is preferred that synthetic resins such as plastics, particularly polycarbonate resins with high impact resistance, rather than glasses are used as a material for eyeglass lenses.

There has been, however, no plastic lens complying with the above requirements, particularly made of a polycarbonate resin. It is noted that JP-B 53-39910/1978 discloses a lens for eyeglasses, which can absorb light over a wide range of wavelength extending from 550 to 600 nm with good visibility. The lens of this type for eyeglasses is made of diethylene glycol bisallylcarbonate (commercially available under the trade name "CR-39" from PPG Industries, Inc.) as the base material; however, if this material is made into a polycarbonate resin, the resulting resin will be difficult to be colored with a dye. Further, the above lens for eyeglasses exhibits a gradual decrease in the transmittance of light over the wavelength range of 550 to 650 nm (corresponding to yellow to orange color). If the transmittance of yellow light is decreased for the purpose of enhancing non-glaring effects, the transmittance of orange light is also decreased with such a decrease. Therefore, when eyeglasses with such lenses are used in an unsuitable situation, for example, these lenses are hard to transmit orange light from sodium lamps (central wavelength, 589 nm) for illumination in a tunnel, and there is a possibility that the filed of vision may become dark.

Under these circumstances, it is the object of the present invention to develop a lens for eyeglasses, which can reduce the glare of sunlight, while retaining the lightness in the field of vision. As a result, it has been found that the above problems can be solved by reducing the transmittance of sunlight over a particular wavelength range, thereby completing the present invention.

Thus the present invention provide a lens for eyeglasses, which is made of a synthetic resin base material comprising an organic dye with an absorption maximum in the vicinity of the central wavelength on the standard relative visibility curve, i.e. in the range of wavelength extending from about 530 to 585 nm, as well as an ultraviolet light absorbing agent and a blue light absorbing agent, the base material having a transmittance minimum in the range of wavelength extending from 550 to 585 nm on the transmittance curve, the transmittance of light at the transmittance minimum being not greater than 25%, the average transmittance of light over the range of wavelength extending from 590 to 660 nm being not less than 15%, and the average transmittance over the range of wavelength extending from 470 to 550 nm being not less than 10%. The above synthetic resin base material may further comprise an infrared light absorbing agent and/or an infrared light reflecting agent as an optional ingredient.
Figure 1 is a graph showing the spectral transmittance of light through one example of the lens for eyeglasses according to the present invention.
Figure 2 is a graph showing the standard relative visibility curve.
Figure 3 is a graph showing the most typical pattern of the spectral transmittance of light through the conventional sunglasses.
Figures 4-8 are graphs showing the spectral transmittance of light through other several examples of the lens for eyeglasses according to the present invention.

The lens for eyeglasses according to the present invention should be made of a synthetic resin base material comprising an organic dye with an absorption maximum in the vicinity of the central wavelength on the standard relative visibility curve, as well as an ultraviolet light absorbing agent and a blue light absorbing agent.

As used herein, the term "central wavelength on the standard relative visibility curve" refers to the wavelength of about 555 nm, and the term "in the vicinity of the central wavelength on the standard relative visibility curve" refers to the range of wavelength extending from about 530 to 585 nm. Furthermore, the term "maximum" or "minimum" is not always used for the greatest or smallest value of a related varying quantity, but refers to the value of the quantity at the point at which it ceases to increase or decrease and begins to decrease or increase, respectively.

Preferred examples of the organic dye with an absorption maximum in the vicinity of the central wavelength on the standard relative visibility curve may include, but are not limited to, any squarylium compound of general formula (I): 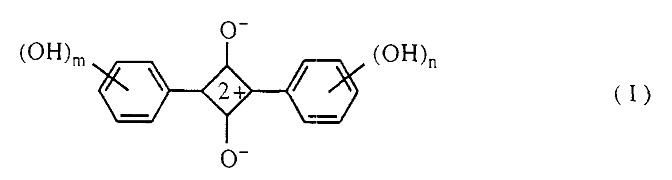 wherein m and n are the same or different and are selected from integers of 1 to 4.

Since neodymium and didymium, which have been used in the conventional glass as a dye for light absorption, are inorganic materials, they can be incorporated in the form of metal ions into glass lenses formed by fusion at high temperatures; however, they cannot be used with any synthetic resin because they are not fully dispersed, when mixed with the synthetic resin, which is due to their incompatibility with the molten resin.

In the present invention, the use of the above organic dye as a light absorbing agent, e.g., a squarylium compound, which can be fully dispersed in the molten resin, makes it possible to reduce the glare of sunlight. For reduction of glare, the use of an organic dye with an absorption maximum at the wavelength of 555 nm is most preferred as an ideal case; however, the organic dye for use in the present invention is not particularly limited to this one, and so long as the absorption peak is in the vicinity of 555 nm, the organic dye can fairly well absorb light in the vicinity of the central wavelength on the standard relative visibility curve because the absorption peak has a width to a certain extent, thereby making it possible to reduce the glare of sunlight without any problem in practical use.

The above squarylium compounds per se are well known in the art and can be produced by or in accordance with the method as described, for example, in Angew. Chem. Internat. Edit., 7, 530-535 (1968) and Liebigs Ann. Chem., 712, 123 (1968).

Examples of the ultraviolet light absorbing agent may include, but are not limited to, any commercially available one, such as obtained under the trade name "JF-86" from Johoku Chemical Co., Ltd. and "Seesorb 705" from Sipro Kasei Co., Ltd.

Examples of the blue light absorbing agent may include, but are not limited to, any commercially available one, such as obtained under the trade name "Kayaset Yellow A-G" from Nippon Kayaku Co., Ltd. and "PS Orange GG" from Mitsui Toatsu Dyes, Ltd.

Examples of the infrared light absorbing or reflecting agents may include, but are not limited to, any commercially available one, such as obtained under the trade name "IR750" from Nippon Kayaku Co., Ltd. and "IR Additive 200" from Dainippon Ink & Chemicals, Inc.

Examples of the synthetic resin base material may include, but are not limited to, any commercially available one for use in eyeglass lenses, such as polycarbonate, which is most preferred because of its high impact resistance, polymethyl methacrylate (PMMA), "CR-39" commercially available from PPG Industries, Inc., and cellulose plastics, e.g., cellulose acetate and cellulose propionate.

The requirements that the lens should have a transmittance minimum in the range of wavelength extending from 550 to 585 nm on the transmittance curve and that the transmittance of light at the transmittance minimum should be not greater than 25% are for decrease in the transmittance of light over the range of wavelength in the sunlight where the greatest glare is given to the eyes. It is preferred that the transmittance of light at the transmittance minimum is not greater than 20%, more preferably not greater than 15%.

The requirement that the average transmittance of light over the range of wavelength extending from 590 to 660 nm should be not less than 15% is for retention of the transmittance of orange light. It is preferred that the average transmittance of light over the range of wavelength extending from 590 to 660 nm is not less than 20%. In addition, it is preferred that the lens has a transmittance maximum in the range of wavelength extending from 590 to 660 nm on the transmittance curve and the transmittance of light at the transmittance maximum is not less than 30%, most preferably not less than 35%. These latter requirements can be effectively achieved by incorporation of an infrared light absorbing agent and/or an infrared light reflecting agent, in addition to the organic dye with an absorption maximum in the vicinity of the central wavelength on the standard relative visibility curve, the ultraviolet light absorbing agent, and the blue light absorbing agent, into the synthetic resin base material. Thus the lens for eyeglasses according to the present invention can be given the appropriate color balance of the whole transmitted light, by preventing the excess transmission of red light, while retaining the transmittance of orange light at a high level.

The requirement that the average transmittance of light over the range of wavelength extending from 470 to 550 nm should be not less than 10% is for achievement of not only the appropriate color balance of the whole transmitted light but also the lightness in the filed of vision. In particular, it is preferred that the transmittance of light at any wavelength in the range of wavelength extending from 470 to 550 nm is not less than 15%, most preferably not less than 20%.

The transmittance of light in the range of wavelength extending from 400 to 450 nm is preferably made substantially equal to zero by the use of a blue light absorbing agent.

The lens for eyeglasses according to the present invention can be prepared, for example, by adding an organic dye with an absorption maximum in the vicinity of the central wavelength on the standard relative visibility curve, an ultraviolet light absorbing agent, a blue light absorbing agent, and if required, an infrared light absorbing agent and/or an infrared light reflecting agent to a synthetic resin base material, followed by mixing and forming into a lens shape by an injection molding technique to ensure that the additives are uniformly dispersed all over the lens. Some of the additives such as light absorbing agents, e.g., infrared light reflecting agent, can be coated on the surface of a lens by vacuum deposition or any other similar techniques.

The content of the organic dye is preferably in the range of 0.0001% to 0.01% by weight, most preferably 0.0005% to 0.005% by weight, based on the weight of the synthetic resin base material. The content of the ultraviolet light absorbing agent is preferably in the range of 0.1% to 1.0% by weight, most preferably 0.3% to 0.8% by weight, based on the weight of the synthetic resin base material. The content of the blue light absorbing agent is preferably in the range of 0.001% to 0.02% by weight, most preferably 0.002% to 0.01% by weight, based on the weight of the synthetic resin base material. The content of the infrared light absorbing agent and/or infrared light reflecting agent is preferably in the range of 0.001% to 0.05% by weight, most preferably 0.001% to 0.02% by weight, based on the weight of the synthetic resin base material.

For practical purposes, a polarizing element such as a polarizing film can also be used in combination with the above synthetic resin base material to produce a lens for eyeglasses. In such a case, the synthetic resin base material and the polarizing element can be formed into one piece by an insert molding technique or any other similar techniques. When an insert molding technique is employed, a polarizing element having a laminated plastic sheet or sheets on one or both surfaces of a polarizing film into one piece is inserted into a mold, which is then used for injection molding of a synthetic resin base material containing various additives to form the polarizing element and the synthetic resin base material into one piece.

A decrease in the transmittance of light through the lens for eyeglasses, which may be caused by combination of a polarizing element and a synthetic resin base material as described above, can be recovered, for example, by changing the content of an organic dye or other additives, so that the transmittance of light and the transmittance curve with respect to the lens for eyeglasses are included within the scope of the present invention.

The present invention will be further illustrated by the following examples; however, the present invention is not limited to these examples.

### Example 1

The ingredients listed below were mixed and formed into a lens shape having an outer diameter of 75 mm and a central thickness of 2 mm by an injection molding machine (commercially available from Nissei Plastic Industrial Co., Ltd.) at a regulated temperature of 250°C to 300°C.

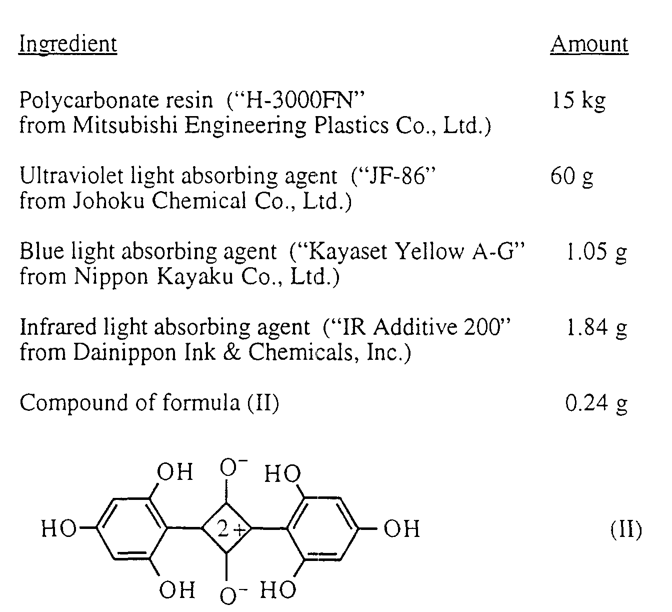

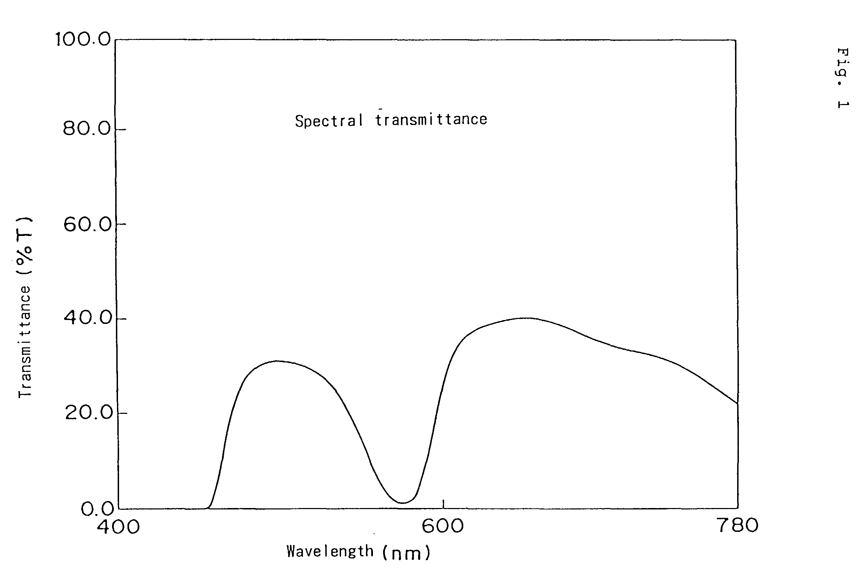

The spectral transmittance of light through the lens thus obtained is shown in Figure 1. This lens gave no sense of glare even under strong sunlight and no trouble in observing an object in the field of vision even when driving in a tunnel.

### Example 2

The ingredients listed below were mixed and formed into a lens shape having an outer diameter of 75 mm and a central thickness of 2 mm by an injection molding machine (commercially available from Nissei Plastic Industrial Co., Ltd.) at a regulated temperature of 250°C to 300°C.

| Ingredient | Amount |
|---|---|
| Polycarbonate resin ("H-3000FN" from Mitsubishi Engineering Plastics Co., Ltd.) | 15 kg |
| Ultraviolet light absorbing agent ("JF-86" from Johoku Chemical Co., Ltd.) | 60 g |
| Blue light absorbing agent ("PS Orange GG" from Mitsui Toatsu Dyes, Ltd.) | 0.5 g |
| Infrared light absorbing agent ("IR750" from Nippon Kayaku Co., Ltd.) | 0.26 g |
| Compound of formula (II) | 0.15 g |

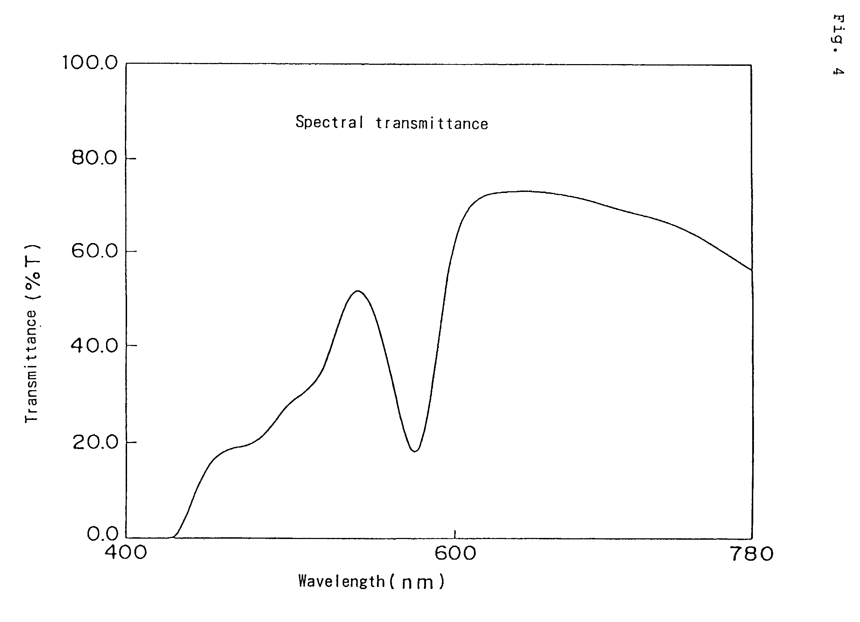

The spectral transmittance of light through the lens thus obtained is shown in Figure 4. This lens gave no sense of glare even under strong sunlight and no trouble in observing an object in the field of vision even when driving in a tunnel.

### Example 3

The ingredients listed below were mixed and formed into a lens shape having an outer diameter of 75 mm and a central thickness of 2 mm by an injection molding machine (commercially available from Nissei Plastic Industrial Co., Ltd.) at a regulated temperature of 250°C to 300°C.

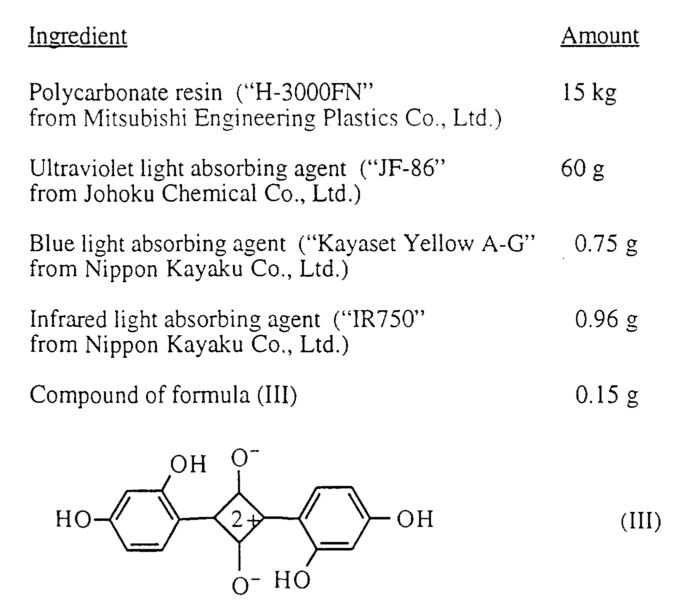

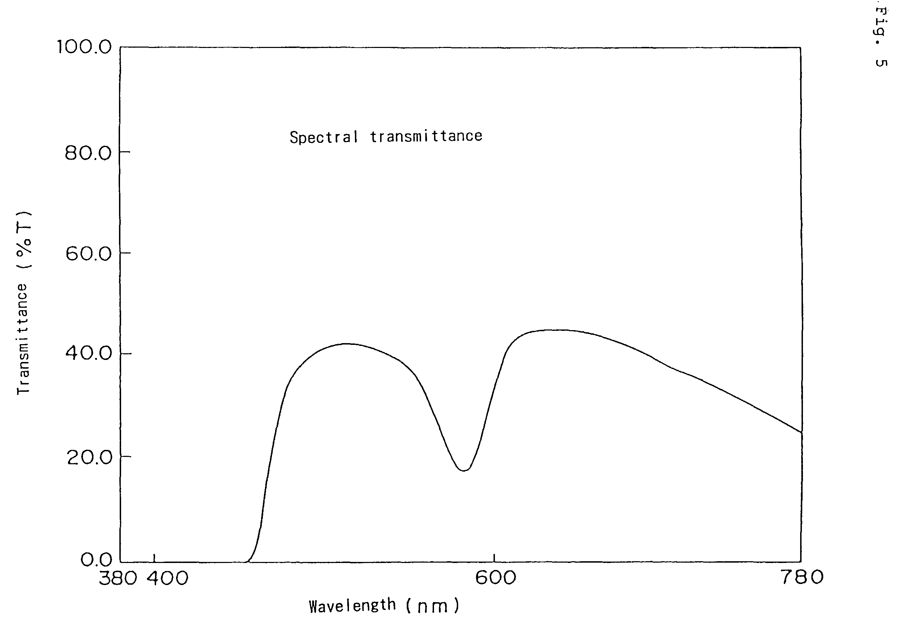

The spectral transmittance of light through the lens thus obtained is shown in Figure 5. This lens gave no sense of glare even under strong sunlight and no trouble in observing an object in the field of vision even when driving in a tunnel.

### Example 4

A 0.8 mm thick polarizing sheet (commercially available under the trade name "Eupironpola" from Mitsubishi Gas Chemical Co., Inc.) having laminated polycarbonate sheets on both surfaces of a polarizing film was punched into a shape corresponding to the outline of an eyeglass lens to form a polarizing element, which was inserted in a mold to have a stable position.

The ingredients listed below were mixed and formed into a lens shape and thus the polarizing element and the molding resin were formed into one piece having an outer diameter of 75 mm and a central thickness of 2 mm by an injection molding machine (commercially available from Nissei Plastic Industrial Co., Ltd.) at a regulated temperature of 250°C to 300°C.

| Ingredient | Amount |
|---|---|
| Polycarbonate resin ("H-3000FN" from Mitsubishi Engineering Plastics Co., Ltd.) | 15 kg |
| Ultraviolet light absorbing agent ("JF-86" from Johoku Chemical Co., Ltd.) | 60 g |
| Blue light absorbing agent ("PS Orange GG" from Mitsui Toatsu Dyes, Ltd.) | 0.4 g |
| Infrared light absorbing agent ("IR750" from Nippon Kayaku Co., Ltd.) | 0.78 g |
| Compound of formula (II) | 0.42 g |

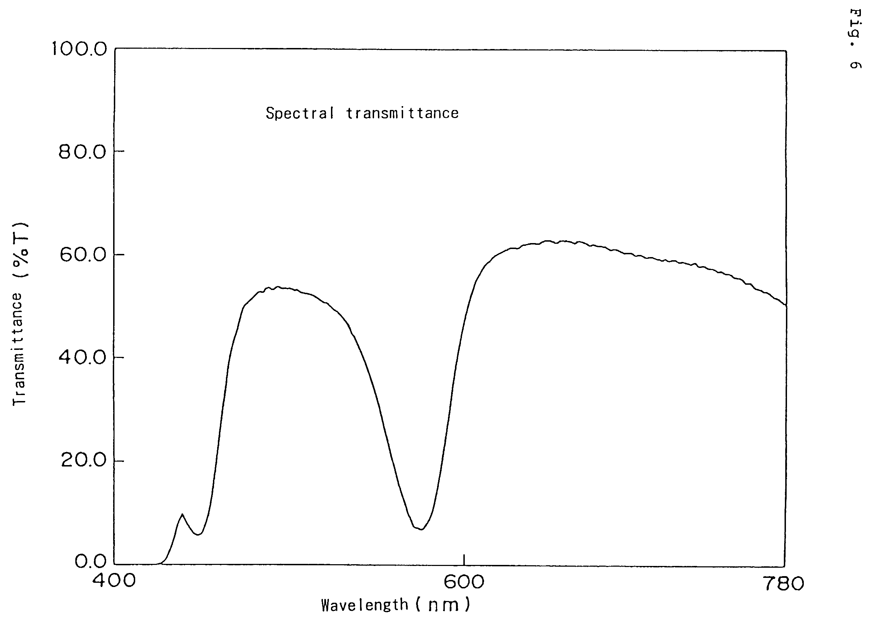

The spectral transmittance of light through the lens thus obtained is shown in Figure 6. This lens gave no sense of glare even under strong sunlight, effective protection against glaring reflected light, and no trouble in observing an object in the field of vision even when driving in a tunnel.

### Example 5

The ingredients listed below were mixed and formed into a lens shape having an outer diameter of 75 mm and a central thickness of 2 mm by an injection molding machine (commercially available from Nissei Plastic Industrial Co., Ltd.) at a regulated temperature of 250°C to 300°C.

| Ingredient | Amount |
|---|---|
| Polycarbonate resin ("H-3000FN" from Mitsubishi Engineering Plastics Co., Ltd.) | 15 kg |
| Ultraviolet light absorbing agent ("JF-86" from Johoku Chemical Co., Ltd.) | 60 g |
| Blue light absorbing agent ("Kayaset Yellow A-G" from Nippon Kayaku Co., Ltd.) | 0.5 g |
| Compound of formula (II) | 0.17 g |

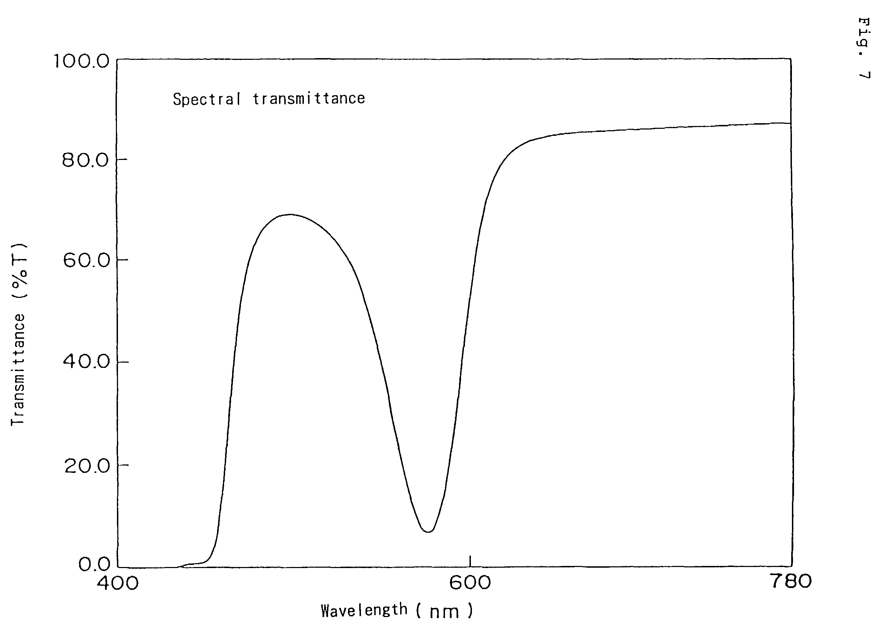

The spectral transmittance of light through the lens thus obtained is shown in Figure 7. This lens gave no sense of glare even under strong sunlight and no trouble in observing an object in the field of vision even when driving in a tunnel.

### Example 6

A 0.8 mm thick polarizing sheet (commercially available under the trade name "Eupironpola"from Mitsubishi Gas Chemical Co., Inc) having laminated polycarbonate sheets on both surfaces of a polarizing film was punched into a shape corresponding to the outline of an eyeglass lens to form a polarizing element, which was inserted in a mold to have a stable position.

The ingredients listed below were mixed and formed into a lens shape and thus the polarizing element and the molding resin were formed into one piece having an outer diameter of 75 mm and a central thickness of 2 mm by an injection molding machine (commercially available from Nissei Plastic Industrial Co., Ltd.) at a regulated temperature of 250°C to 300°C.

| Ingredient | Amount |
|---|---|
| Polycarbonate resin ("H-3000FN" from Mitsubishi Engineering Plastics Co., Ltd.) | 15 kg |
| Ultraviolet light absorbing agent ("JF-86" from Johoku Chemical Co., Ltd.) | 60 g |
| Blue light absorbing agent ("PS Orange GG" from Mitsui Toatsu Dyes, Ltd.) | 0.4 g |
| Compound of formula (II) | 0.36 g |

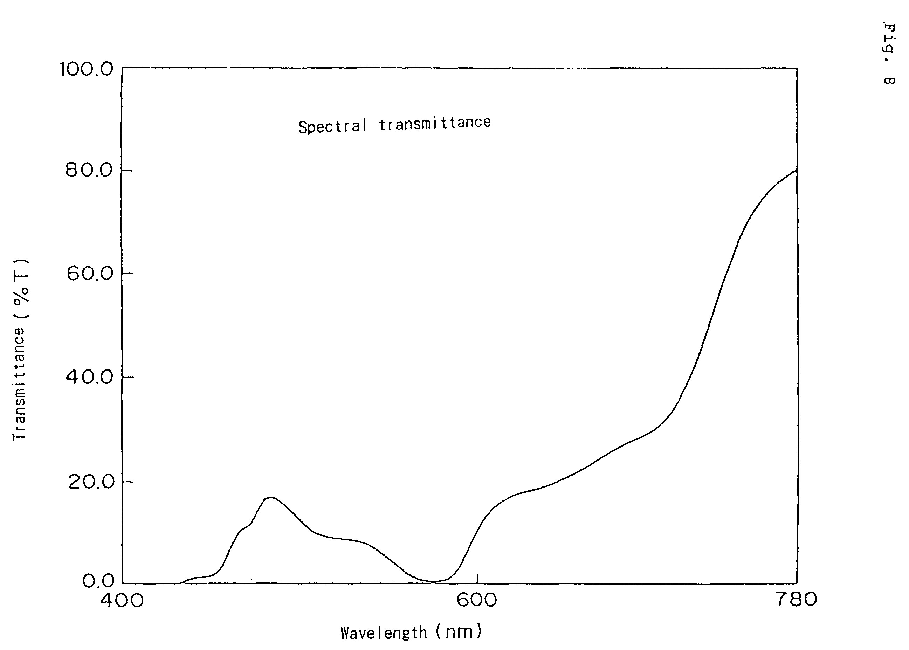

The spectral transmittance of light through the lens thus obtained is shown in Figure 8. This lens gave no sense of glare even under strong sunlight, effective protection against glaring reflected light, and no trouble in observing an object in the field of vision even when driving in a tunnel.

As described above, the present invention makes it possible to provide a lens for eyeglasses with many uses, which can reduce the glare of sunlight, which can be used under orange light from sodium lamps (central wavelength, 589 nm) for illumination in a tunnel, and which can protect the eyes against harmful ultraviolet light, blue light, and if required, infrared light.

## Claims

1. A lens for eyeglasses, which is made of a synthetic resin base material comprising an organic dye with an absorption maximum in the range of wavelength extending from about 530 to 585 nm. as well as an ultraviolet light absorbing agent and a blue light absorbing agent, the base material having a transmittance minimum in the range of wavelength extending from 550 to 585 nm on the transmittance curve, the transmittance of light at the transmittance minimum being not greater than 25%, the average transmittance of light over the range of wavelength extending from 590 to 660 nm being not less than 15%, and the average transmittance of light over the range of wavelength extending from 470 to 550 nm being not less than 10%.

2. A lens for eyeglasses according to claim 1, wherein the synthetic resin base material further comprises at least one selected from the group consisting of infrared light absorbing agents and infrared light reflecting agents, and the base material has a transmittance maximum in the range of wavelength extending from 590 to 660 nm on the transmittance curve, the transmittance of light at the transmittance maximum being not less than 30%, and the transmittance of light at any wavelength in the range of wavelength extending from 470 to 550 nm being not less than 15%.

3. A lens for eyeglasses according to claim 1 or 2, wherein the organic dye with an absorption maximum in the range of wavelength extending from about 530 to 585 nm. is a squarylium compound of general formula (I): 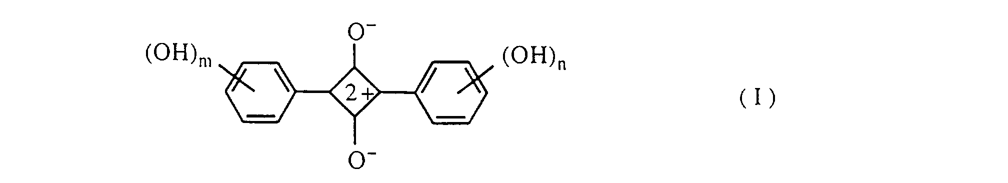 wherein m and n are the same or different and are selected from integers of 1 to 4.

4. A lens for eyeglasses according to claim 1, 2, or 3, which further comprises a polarizing element formed with the synthetic resin base material into one piece.

## Patentansprüche

1. Brillenlinse, hergestellt aus einem Kunstharzgrundmaterial, umfassend einen organischen Farbstoff mit einem Absorptionsmaximum im Wellenlängenbereich von etwa 530 bis 585 nm sowie ein Ultraviolettabsorptionsmittel und ein Blaulichtabsorptionsmittel, wobei das Grundmaterial ein Durchlässigkeitsminimum im Wellenlängenbereich von 550 bis 585 nm auf der Durchlässigkeitskurve aufweist, die Lichtdurchlässigkeit am Durchlässigkeitsminimum nicht größer als 25% ist, die durchschnittliche Lichtdurchlässigkeit über dem Wellenlängenbereich von 590 bis 660 nm nicht niedriger als 15% ist und die durchschnittliche Lichtdurchlässigkeit über dem Wellenlängenbereich von 470 bis 550 nm nicht niedriger als 10% ist.

2. Brillenlinse gemäß Anspruch 1, wobei das Kunstharzgrundmaterial weiter mindestens ein Mittel, ausgewählt aus Infrarotlichtabsorptionsmitteln und Infrarotlichtreflexionsmitteln, umfasst und das Grundmaterial ein Durchlässigkeitsmaximum im Wellenlängenbereich von 590 bis 660 nm auf der Durchlässigkeitskurve aufweist, die Lichtdurchlässigkeit am Durchlässigkeitsmaximum nicht niedriger als 30% ist und die Lichtdurchlässigkeit bei jedem beliebigen Wellenlängenbereich von 470 bis 550 nm nicht niedriger als 15% ist.

3. Brillenlinse gemäß Abspruch 1 oder 2, wobei der organische Farbstoff mit einem Absorptionsmaximum im Wellenlängenbereich von etwa 530 bis 585 nm eine Squaryliumverbindung der allgemeinen Formel (I) ist, 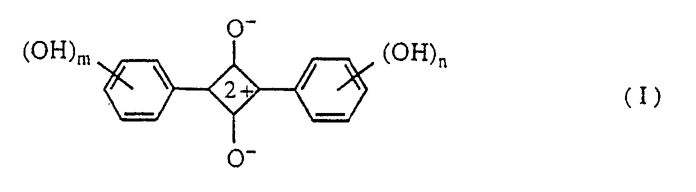 wobei m und n gleich oder verschieden sein können und aus ganzen Zahlen von 1 bis 4 ausgewählt sind.

4. Brillenlinse gemäß Anspruch 1, 2 oder 3, weiter umfassend ein Polarisationselement, gebildet aus dem Kunstharzgrundmaterial in einem Stück.

## Revendications

1. Lentille pour lunettes, qui est faite d'une matière de base de résine synthétique comprenant un colorant organique avec un maximum d'absorption se situant dans la plage de longueur d'onde s'étendant d'environ 530 à 585 nm, ainsi qu'un agent absorbant la lumière ultraviolette et un agent absorbant la lumière bleue, la matière de base ayant un minimum de transmittance dans la plage de longueur d'onde s'étendant de 550 à 585 nm sur la courbe de transmittance, la transmittance de lumière au minimum de transmittance étant non supérieure à 25%, la transmittance moyenne de lumière sur la plage de longueur d'onde s'étendant de 590 à 660 nm étant non inférieure à 15%, et la transmittance moyenne de lumière sur la plage de longueur d'onde s'étendant de 470 à 550 nm étant non inférieure à 10%.

2. Lentille pour lunettes selon la revendication 1, dans laquelle la matière de base de résine synthétique comprend en outre au moins un élément choisi dans le groupe constitué par les agents absorbant la lumière infrarouge et les agents réfléchissant la lumière infrarouge, et la matière de base a un maximum de transmittance dans la plage de longueur d'onde s'étendant de 590 à 660 nm sur la courbe de transmittance, la transmittance de lumière au maximum de transmittance étant non inférieure à 30%, et la transmittance de lumière à n'importe quelle longueur d'onde dans la plage de longueur d'onde s'étendant de 470 à 550 nm étant non inférieure à 15%.

3. Lentille pour lunettes selon l'une des revendications 1 ou 2, dans laquelle le colorant organique avec un maximum d'absorption dans la plage de longueur d'onde s'étendant d'environ 530 à 585 nm est un composé de squarylium de formule générale (I) : 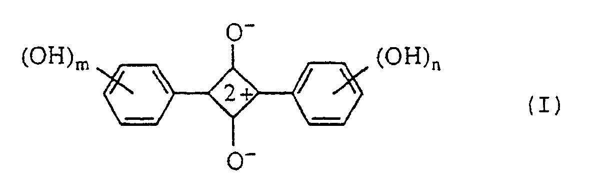 dans laquelle m et n sont identiques ou différents et sont choisis parmi les nombres entiers de 1 à 4.

4. Lentille pour lunettes selon l'une des revendications 1, 2 ou 3, qui comprend en outre un élément polarisant formé d'une seule pièce avec la matière de base de résine synthétique.
